# EUROPÄISCHE PATENTSCHRIFT

(11) **EP 0 600 368 B1**
(45) Veröffentlichungstag und Bekanntmachung des Hinweises auf die Patenterteilung: **22.10.1997**
(21) Anmeldenummer: 93118976.5
(22) Anmeldetag: 25.11.1993
(51) Int. Cl.: C08J 3/22, C08K 5/52, C08L 23/06

(54) **Verfahren zur Stabilisierung von Polyethylengriess**
Process for stabilising polyethylene powder
Procédé pour la stabilisation de poudre de polyéthylène

(30) Priorität: 03.12.1992 DE 4240694
(43) Veröffentlichungstag der Anmeldung: 08.06.1994
(73) Patentinhaber: BASF Aktiengesellschaft, 67063 Ludwigshafen (DE)
(72) Erfinder: Pfirrmann, Günther, Dr., D-67069 Ludwigshafen (DE); Boes, Dieter, D-69168 Wiesloch (DE); Paatz, Rudolf, Dr., D-67256 Weisenheim (DE)

(56) Entgegenhaltungen:
- EP-A- 0 518 455
- DE-A- 2 826 360
- GB-A- 2 261 667
- US-A- 3 040 124

## Beschreibung

Die vorliegende Erfindung betrifft ein Verfahren zur Stabilisierung von Polyethylengrieß, wobei man diesen mit einem sterisch gehinderten Phenol und einem Ester der phosphorigen oder der unterphosphorigen Säure versetzt.

Weiterhin betrifft die vorliegende Erfindung einen stabilisierten Polyethylengrieß, erhältlich nach dem erfindungsgemäßen Verfahren.

Es ist bekannt, Ester der phosphorigen Säure als Stabilisatoren in Polyolefinen einzusetzen. Häufig werden dabei arylgruppenhaltige Phosphite zusammen mit phenolischen Verbindungen und Thioestern eingesetzt, um die damit behandelten Polyolefine insbesondere vor thermooxidativer Schädigung durch den Angriff von Sauerstoffmolekülen zu schützen (US-A 3 558 554). Dabei wirken die phenolischen Verbindungen insbesondere als Radikalfänger für Sauerstoffradikale. Stabilisatormischungen aus Phosphiten und Phenolen werden u.a. auch in der US-A 3 533 989 und der GB-A 1 078 772 beschrieben.

Weiterhin ist aus der DE-C 26 06 358 die Verwendung von Stabilisatorsystemen aus Triarylphosphiten und Phenolen in Polyolefinen bekannt, wobei sich die Wirksamkeit der dabei eingesetzten Stabilisatormischungen insbesondere durch eine hohe Farblosigkeit der dabei anfallenden Polyolefine äußert.

Bei der Anwendung derartiger Stabilisatormischungen für Polyethylengrieß treten jedoch häufig Schwierigkeiten auf, insbesondere dann, wenn die Stabilisatoren als Pulver oder als unverdünnte Flüssigkeit auf die Oberfläche des Grießes aufgebracht werden. Da die Adhäsionskräfte zwischen der weitgehend unpolaren Polyethylenoberfläche und den teilweise polaren Stabilisatoren relativ gering sind, können sich letztere leicht wieder von der Oberfläche des Grießes ablösen. Hierdurch können bei der Verarbeitung des so stabilisierten Polyethylengrießes häufig inhomogene Gemenge entstehen, die u.a. ungleichmäßige Wanddickenverteilungen, inhomogene Oberflächen und uneinheitliche Färbungen der aus dem Polyethylengrieß erhaltenen Formkörper und Folien zur Folge haben. Darüber hinaus können sich die von der Grießoberfläche abgelösten Stabilisatorpartikeln in den Einzugsbereichen von Mischapparaturen, beispielsweise von Extrudern, ablagern und auf diese Weise deren Durchsatz verringern.

In DE-A-2 826 360 sowie in US-A-3 404 124 werden Verfahren zur Herstellung nicht staubender Stabilisatorzubereitungen beschrieben. Dabei werden die Stabilisatoren in eine Polyolefinmatrix eingearbeitet, welche dann als Masterbatch den Polyolefinzubereitungen zur Stabilisierung zugesetzt werden können.

Die auf diese Weise eingearbeiteten Stabilisatoren werden jedoch erst beim Aufschmelzen der Polyolefinzubereitungen, also beispielsweise beim Extrudieren, freigesetzt.

Der vorliegenden Erfindung lag daher die Aufgabe zugrunde, den geschilderten Mängeln abzuhelfen und ein verbessertes Verfahren zur Stabilisierung von Polyethylengrieß zu entwickeln, welches insbesondere die Ablösung von Stabilisatorpartikeln von der Grießoberfläche vermeidet und dabei auch bei der Lagerung eine wirksame Stabilisierung gewährleistet.

Demgemäß wurde ein verbessertes Verfahren zur Stabilisierung von Polyethylengrieß gefunden, wobei man dieses mit einem sterisch gehinderten Phenol und einem Ester der phosphorigen oder der unterphosphorigen Säure versetzt, welches dadurch gekennzeichnet ist, daß man den Ester der phosphorigen oder der unterphosphorigen Säure dem Polyethylengrieß innerhalb einer gemahlenen Polyolefinmatrix anbietet, in welchem der Ester eingearbeitet ist, wobei die Polyolefinmatrix mit dem Polyethylengrieß verträglich ist, und das sterisch gehinderte Phenol in direkter Weise mit dem Polyethylengrieß vermischt.

Nach dem erfindungsgemäßen Verfahren wird das sterisch gehinderte Phenol vorzugsweise in Mengen von 0,01 bis 1 Gew.-%, insbesondere in Mengen von 0,1 bis 0,4 Gew.-%, bezogen auf den Polyethylengrieß, diesem beigemischt. Die gemahlene Polyolefinmatrix, in der der Ester der phosphorigen oder der unterphosphorigen Säure eingearbeitet ist, wird dem Polyethylengrieß vorzugsweise in Mengen von 0,1 bis 10 Gew.-%, insbesondere in Mengen von 0,1 bis 5 Gew.-% beigemischt. Auch hierbei bezieht sich die Bezeichnung Gew.-% wiederum auf den Polyethylengrieß.

Als sterisch gehinderte Phenole werden dabei insbesondere die Ester der β-Hydroxyphenylpropionsäure verwendet, die wiederum als Hydroxyverbindungen ein- oder mehrwertige Alkohole wie beispielsweise Methanol, Ethanol, Propanol, Isopropanol, n-Butanol, iso-Butanol, tert. Butanol, Pentanol, Hexanol, Octadecanol, 1,6-Hexandiol, Ethylenglykol, Thiodiethylenglykol, Neopentylglykol oder Pentaerythrit enthalten können. Weitere besonders geeignete sterisch gehinderte Phenole enthalten mehrere phenolische Gruppen im Molekül.

Besonders geeignete sterisch gehinderte Phenole sind u.a. Octadecyl-3-(3,5-di-tert.butyl-4-hydroxyphenyl)-propionat, Pentaerythrit-tetra[3-(3,5-di-tert.butyl-4-hydroxyphenyl)-propionat], Thiodiethylenglykol-β-[4-hydroxy-3,5-di-tert.butyl-phenyl]-propionat und 1,3,5-Trimethyl-2,4,6-tris(3,5-di-tert.butyl-4-hydroxybenzyl)benzol.

Die Herstellung derartiger sterisch gehinderter Phenole ist dem durchschnittlichen Fachmann geläufig, so daß diesbezüglich auf die einschlägige Fachliteratur verwiesen werden kann.

Als bevorzugte Ester der phosphorigen oder der unterphosphorigen Säure werden vor allem Alkylgruppen enthaltende aromatische Ester dieser Säuren verwendet. Dazu zählen insbesondere Triarylphosphite (Ester der phosphorigen Säure) und Tetrakisdiphosphite (Ester der unterphosphorigen Säure). Besonders bevorzugte Ester sind dabei Tris-[2,4-di-tert.butylphenylphosphit und Tetrakis-[2,4-di-tert.butylphenyl)-4,4'-biphenylen-diphosphonit. Es können auch Mischungen aus derartigen Phosphiten und Phosphoniten bzw. Diphosphoniten in üblichen Mengenverhältnissen eingesetzt werden.

Die Herstellung derartiger Ester der phosphorigen oder unterphosphorigen Säure kann nach üblichen, dem durchschnittlichen Fachmann geläufigen Methoden erfolgen.

Das erfindungsgemäße Verfahren eignet sich zur Stabilisierung von Polyethylengrieß, insbesondere von Grieß aus HDPE (High Density Polyethylen). Derartige Polyethylengrieße weisen üblicherweise Dichten von 0,93 bis 0,98 g/cm³ und Schmelze-Fließraten MFR von weniger als 20 g/10 min. bei 190°C und einem Gewicht von 2,16 kg (bestimmt nach ISO 1133) auf. Die Schmelze-Fließrate entspricht dabei der Menge an Polymerisat, die innerhalb von 10 Minuten aus der nach ISO 1133 genormten Prüfvorrichtung bei einer Temperatur von 190°C und unter einem Gewicht von 2,16 kg ausgepreßt wird.

Die Herstellung derartiger Polyethylene erfolgt üblicherweise durch Niederdruckpolymerisation mit metallhaltigen Katalysatoren, beispielsweise mit Hilfe von titan- und aluminiumhaltigen Ziegler-Katalysatoren, oder durch Phillips-Katalysatoren auf der Basis von chromhaltigen Verbindungen. Die Polymerisationsreaktion kann dabei mit den in der Technik üblichen Reaktoren, sowohl in der Gasphase, in Lösung oder auch in einer Aufschlämmung durchgeführt werden.

Nach dem erfindungsgemäßen Verfahren wird der Ester der phosphorigen oder der unterphosphorigen Säure dem Polyethylengrieß innerhalb einer gemahlenen Polyolefinmatrix angeboten, in der der Ester eingearbeitet ist und welche mit dem Polyethylengrieß verträglich ist. Vorzugsweise wird dabei eine Matrix aus Polyethylen, insbesondere aus HDPE verwendet. Eine derartige Polyolefinmatrix wird üblicherweise auch "Masterbatch" genannt.

Nach einer bevorzugten Variante des erfindungsgemäßen Verfahrens wird das sterisch gehinderte Phenol und die einen Ester der phosphorigen oder der unterphosphorigen Säure enthaltende gemahlene Polyolefinmatrix in mindestens zwei getrennten Stufen mit dem Polyethylengrieß versetzt. Vorzugsweise wird dabei zunächst in einer ersten Stufe der Polyethylengrieß mit einem sterisch gehinderten Phenol versetzt. Dies erfolgt in den üblichen, in der Kunststofftechnik zum Vermischen von Stoffen verwendeten Apparaturen, beispielsweise in Mischern, Extrudern, Knetern oder in Mühlen. Das sterisch gehinderte Phenol kann dabei sowohl als reine Substanz, als auch in Form einer Lösung in einem inerten Lösungsmittel eingesetzt werden. Vorzugsweise wird das sterisch gehinderte Phenol tropfenförmig eingebracht bzw. versprüht. Dabei kann es sich empfehlen, das sterisch gehinderte Phenol bei Temperaturen oberhalb seines Schmelzpunktes mit dem Polyethylengrieß zu vereinigen, beispielsweise bei Temperaturen von 80 bis 100°C im Falle von Octadecyl-3-(3,5-di-tert.butyl-4-hydroxyphenyl)-propionat. Die übrigen Reaktionsbedingungen wie Druck und Verweilzeiten hängen entscheidend von den jeweiligen Reaktionsbedingungen ab und sind dem Fachmann geläufig.

Im Anschluß daran wird in einer zweiten Stufe der Polyethylengrieß mit der einen Ester der phosphorigen oder der unterphosphorigen Säure enthaltenen gemahlenen Polyolefinmatrix versetzt. Dies erfolgt in den üblichen Apparaturen wie beispielsweise in Mischern, Extrudern, Knetern oder Mühlen und weist bezüglich der dabei einzuhaltenden Verfahrensparameter keine Besonderheiten auf. Übliche Verfahrensparameter sind in diesem Fall Temperaturen unterhalb des Schmelzpunktes von Polyethylen und dem Ester der phosphorigen oder der unterphosphorigen Säure von etwa 10 bis 60°C, insbesondere von etwa 20 bis 40°C.

Eine weitere Variante des erfindungsgemäßen Verfahrens ist die Einbringung der die Ester der phosphorigen oder der unterphosphorigen Säure enthaltenden, gemahlenen Polyolefinmatrix (Masterbatch) in einer Verfahrensstufe mit dem sterisch gehinderten Phenol in den Polyethylengrieß. In diesem Fall wird bei einer Temperatur oberhalb des Schmelzpunktes des sterisch gehinderten Phenols gearbeitet, beispielsweise bei 80 bis 100°C im Falle von Octadecyl-3-(3,5-di-tert.butyl-4-hydroxyphenyl)-propionat.

Die Einarbeitung der Ester in die Polyolefinmatrix erfolgt ebenfalls in Mischern, Extrudern, Knetern oder Mühlen, bei gewöhnlichen, dem Fachmann geläufigen Verfahrensparametern, beispielsweise bei Temperaturen von 180 bis 220°C und Verweilzeiten von 3 bis 7 Minuten. Üblicherweise werden die Ester in Mengen von 5 bis 50 Gew.-%, vorzugsweise von 10 bis 30 Gew.-%, bezogen auf die Polyolefinmatrix, in diese eingearbeitet. Dabei empfiehlt es sich, die Ester in die geschmolzene Polyolefinmatrix einzubringen. Es können in diese Polymermatrix sowohl ein oder aber mehrere verschiedene Ester der phosphorigen oder der unterphosphorigen Säure eingemischt werden. Gegebenenfalls können in die Polymermatrix auch noch zusätzlich untergeordnete Mengen des sterisch gehinderten Phenols eingearbeitet werden. In diesem Fall liegt das Mengenverhältnis Ester/sterisch gehindertes Phenol bei etwa 5:1 bis etwa 20:1.

Die auf diese Weise erhältliche Polyolefinmatrix (Masterbatch) wird vor ihrer Verwendung im erfindungsgemäßen Verfahren vorzugsweise noch auf Korngrößen < 3 mm, insbesondere < 2 mm gemahlen. Dies erfolgt üblicherweise in sogenannten Planscheibenmühlen.

Das erfindungsgemäße Verfahren ermöglicht u.a. eine bessere Vorverteilung der als Stabilisatoren verwendeten Phenole und Phosphite/Phosphonite und eine leichtere Homogenisierung der Stabilisatoren mit dem Polyethylengrieß. Eine Ablösung der Stabilisatoren von der Grießoberfläche kann dadurch verhindert werden.

Der auf diese Weise erhältliche, erfindungsgemäß stabilisierte Polyethylengrieß zeichnet sich insbesondere durch eine verbesserte Stabilisatorhaftung bzw. Sedimentationsstabilität aus.

Neben den als Stabilisatoren verwendeten sterisch gehinderten Phenolen und den Estern der phosphorigen oder der unterphosphorigen Säuren können die stabilisierten Polyethylengrieße noch zusätzliche Additive wie beispielsweise Gleitmittel, Antistatika, UV-Absorber, Viskositätsmodifizierer, Antiblockmittel, Schlagzähmacher, Mattierungsmittel, Flammschutzmittel, Biostabilisatoren, Nukleierungsmittel oder Härter halten.

### Beispiele und Vergleichsbeispiele A bis E

### Beispiel

a) Herstellung einer Polyethylenmatrix (Masterbatch) aus einem Ester der phosphorigen Säure und einem Polyethylen
   80 Gew.-Teile eines Polyethylens mit einer Dichte von 0,95 g/cm³ und einer Schmelze-Fließrate MFR 190/2,16 von 0,2 g/10 min (nach ISO 1133) wurden in einem Kneter bei einer Temperatur von 200°C mit 20 Gew.-Teilen einer Mischung aus 9 Teilen Tris-[2,4-di-tert.butylphenylphosphit] und 1 Teil Octadecyl-3-(3,5-di-tert.butyl-4-hydroxyphenyl)-propionat versetzt und 5 Minuten lang vermengt. Die auf diese Weise entstandene Polyethylenmatrix (Masterbatch) wurde im Anschluß daran in einem Extruder bei 190°C granuliert und in einer Mühle auf Korngrößen von etwa < 1 mm vermahlen.
b) Herstellung eines vorstablisierten Polyethylengrießes
   100 kg eines Polyethylengrießes mit einer Dichte von 0,954 g/cm³ und einer Schmelze-Fließrate von 2 g/10 min bei 190°C und einem Gewicht von 21,6 kg (nach ISO 1133) wurden in einem Mischer bei 90°C mit 0,15 Gew.-%, bezogen auf den Polyethylengrieß mit Octadecyl-3-(3,5-di-tert.-butyl-4-hydroxyphenyl)-propionat 30 Minuten lang vermengt. Das sterisch gehinderte Phenol wurde dabei als Schmelze zudosiert.
c) Zumischen der in a) hergestellten Polyethylenmatrix (Masterbatch) zu dem nach b) vorstabilisierten Polyethylengrieß
   100 kg des in b) erhaltenen vorstabilisierten Polyethylengrießes wurden in einem Mischer bei 23°C mit 0,4 Gew.-%, bezogen auf den Polyethylengrieß, des nach a) hergestellten Masterbatches vereinigt und 30 Minuten lang vermengt.
   Die Stabilisatorhaftung (Sedimentationsstabilität), der Extruderdurchsatz und die Stabilisator-Wirkung (Brabender-Test) können für dieses erfindungsgemäße Beispiel der nachfolgenden Tabelle entnommen werden.

### Vergleichsbeispiel A

Entsprechend dem Abschnitt b) des erfindungsgemäßen Beispiels wurden 100 kg des gleichen Polyethylengrießes mit 0,15 Gew.-%, bezogen auf den Polyethylengrieß, Octadecyl-3-(3,5-di-tert.butyl-4-hydroxyphenyl)-propionat unter den gleichen Bedingungen vermengt.

### Vergleichsbeispiel B

100 kg des gleichen Polyethylengrießes wurden mit 0,15 Gew.-%, bezogen auf den Polyethylengrieß, einer Mischung aus 3 Teilen Tris-[2,4-di-tert.butylphenylphosphit] und 1 Teil Pentaerythrityl-tetrakis-[3-(3,5-di-tert.butyl-4-hydroxyphenyl)-propionat in einem Mischer bei 23°C über einen Zeitraum von 30 min vermengt. Die Mischbedingungen entsprechen dem Abschnitt c) des erfindungsgemäßen Beispiels.

### Vergleichsbeispiel C

100 kg des gleichen Polyethylengrießes wurden mit 0,15 Gew.-%, bezogen auf den Polyethylengrieß, einer Mischung aus 10 Teilen 1,3,5-Trimethyl-2,4,6-tris-(3,5-di-tert.butyl-4-hydroxybenzyl)benzol und 3 Teilen Tris-[2,4-di-tert.butylphenylphosphit] gemäß Vergleichsbeispiel B vermengt.

### Vergleichsbeispiel D

I. In einem Intensivmischer wurden zunächst bei 30°C 9 Teile Tris[2,4-di-tert.butylphenylphosphit] und 1 Teil Octadecyl-3-(3,5-di-tert.butyl-4-hydroxyphenyl)-propionat 30 Minuten lang lose vermischt.
II. Entsprechend dem Abschnitt b) des erfindungsgemäßen Beispiels wurden 100 kg des gleichen Polyethylengrießes mit 0,15 Gew.-%, bezogen auf den Polyethylengrieß, Octadecyl-3-(3,5-di-tert.butyl-4-hydroxyphenyl)-propionat unter den gleichen Bedingungen vermengt.
III. Der dabei erhaltene vorstabilisierte Polyethylengrieß wurde anschließend mit 0,05 Gew.-%, bezogen auf den Polyethylengrieß, der aus dem Abschnitt I erhaltenen losen Mischung unter den gleichen Bedingungen wie im Abschnitt c) des erfindungsgemäßen Beispiels vermengt.

### Vergleichsbeispiel E

Das Vergleichsbeispiel D wurde wiederholt, wobei die aus dem Abschnitt I erhaltene lose Mischung als staubarme, grobkörnige, dem Polyethylengrieß angepaßte handelsübliche Kompaktatversion wie im Abschnitt III mit dem vorstabilisierten Polyethylengrieß vereinigt wurde.

In der nachstehenden Tabelle sind für die Vergleichsbeispiele A bis E die Stabilisatorhaftung (Sedimentationsstabilität), der Extruderdurchsatz und die Stabilisatorwirkung (Brabender-Test) im Vergleich zum erfindungsgemäßen Beispiel aufgeführt.

**Tabelle**

| | erfindungsgemäßes Beispiel | Vergleichsbeispiele | | | | |
|---|---|---|---|---|---|---|
| | | A | B | C | D | E |
| Stabilisatorhaftung/Sedimentationsstabilität [%] | 90 | 90 | 40 | 20 | 70 | 80 |
| | | | | | | |
| Extruderdurchsatz [kg/h] | 27 | 27 | 21 | 21 | 24 | 25 |
| | | | | | | |
| Stabilisatorwirkung Brabender-Test [min.] | 18 | 6 | 15 | 17 | 10 | 10 |

Die Bestimmung der Stabilisatorhaftung/Sedimentationsstabilität erfolgte in Labor-Schütteltests mit entspanntem Wasser als Separationsmedium (Vibrationsmischer). Dabei wurde der Prozentsatz an Stabilisator ermittelt, der auf dem Polyethylengrieß haften bleibt.

Bei dieser Prüfung wurden ca. 5 g des stabilisierten Polyethylengrießes in einem 250 ml Erlenmeyerkolben mit ca. 50 ml Wasser und ca. 20 mg eines Netzmittels (Lutensol ^{R} FAS der BASF Aktiengesellschaft) 10 min lang mit einer Schüttelapparatur geschüttelt. Anschließend wurde der auf dem Wasser schwimmende stabilisierte Polyethylengrieß durch eine Absaugvorrichtung vom Wasser abgetrennt und getrocknet. Die Differenz des Stabilisatorgehaltes im Grieß vor und nach dem Schüt teln in Prozent gibt an, wieviel Prozent nichthaftender Stabilisator im Grieß vorlagen.

Der Extruderdurchsatz wurde in einer Blasformanlage : Kautex V8 mit einer Schneckendrehzahl von 120 Umdrehungen pro Minute ermittelt. Der Extruderdurchsatz wurde dabei in kg pro Stunde angegeben.

Die Stabilisatorwirkung wurde über den sogenannten Brabender-Test ermittelt. Hierbei wurde in einem Brabender-Plastograph die stabilisierte Schmelze (Kopftemperatur 210°C) solange geknetet, bis das Drehmoment anstieg. Eine hohe Stabilitätszeit, innerhalb der die Vernetzungsreaktionen praktisch nicht stattfinden kann, steht im Zusammenhang mit einer sicheren Verarbeitbarkeit in der Praxis ohne störende Oberflächenläsionen wie z.B. Vernetzungsknoten bei Blasformteilen (Fäsern, Kanister etc.).

Aus der aufgeführten Tabelle geht u.a. hervor, daß erst das erfindungsgemäße Beispiel eine sehr günstige Kombination von hoher Stabilisatorhaftung, einem hohen Extruderdurchsatz und einer möglichst langanhaltenden Stabilisatorwirkung aufweist.

## Patentansprüche

1. Verfahren zur Stabilisierung von Polyethylengrieß, wobei man diesen mit einem sterisch gehinderten Phenol und einem Ester der phosphorigen oder der unterphosphorigen Säure versetzt, dadurch gekennzeichnet, daß man den Ester der phosphorigen oder der unterphosphorigen Säure dem Polyethylengrieß innerhalb einer gemahlenen Polyolefinmatrix anbietet, in welcher der Ester eingeabeitet ist, wobei die Polyolefinmatrix mit dem Polyethylengrieß verträglich ist, und das sterisch gehinderte Phenol in direkter Weise mit dem Polyethylengrieß vermischt.

2. Verfahren nach Anspruch 1, dadurch gekennzeichnet, daß als gemahlene Polyolefinmatrix Polyethylen verwendet wird.

3. Verfahren nach den Ansprüchen 1 oder 2, dadurch gekennzeichnet, daß das sterisch gehinderte Phenol in Mengen von 0,01 bis 1 Gew.-%, bezogen auf den Polyethylengrieß, verwendet wird.

4. Verfahren nach den Ansprüchen 1 bis 3, dadurch gekennzeichnet, daß die gemahlene Polyolefinmatrix in Mengen von 0,1 bis 10 Gew.-%, bezogen auf das Polyethylengrieß, eingesetzt wird.

5. Verfahren nach den Ansprüchen 1 bis 4, dadurch gekennzeichnet, daß das sterisch gehinderte Phenol und die einen Ester der phosphorigen oder der unterphosphorigen Säure enthaltende gemahlene Polyolefinmatrix in mindestens zwei getrennten Stufen mit dem Polyethylengrieß versetzt werden.

6. Verfahren nach Anspruch 5, dadurch gekennzeichnet, daß der Polyethylengrieß zunächst in einer ersten Stufe mit einem sterisch gehinderten Phenol und anschließend in einer zweiten Stufe mit der einen Ester der phosphorigen oder der unterphosphorigen Säure enthaltenden gemahlenen Polyolefinmatrix versetzt wird.

7. Verfahren nach den Ansprüchen 1 bis 4, dadurch gekennzeichnet, daß der Polyethylengrieß mit dem sterisch gehinderten Phenol und der einen Ester der phosphorigen oder der unterphosphorigen Säure enthaltenden, gemahlenen Polyolefinmatrix in einer Verfahrensstufe versetzt wird.

8. Verfahren nach den Ansprüchen 1 bis 7, dadurch gekennzeichnet, daß die Umsetzung des Polyethylengrießes mit dem sterisch gehinderten Phenol bei Temperaturen oberhalb des Schmelzpunktes des sterisch gehinderten Phenols erfolgt.

9. Verfahren nach den Ansprüchen 1 bis 8, dadurch gekennzeichnet, daß als sterisch gehinderte Phenole Ester der β-Hydroxyphenylpropionsäure verwendet werden.

10. Verfahren nach den Ansprüchen 1 bis 9, dadurch gekennzeichnet, daß Alkylgruppen enthaltende aromatische Ester der phosphorigen oder der unterphosphorigen Säure in der gemahlenen Polyolefinmatrix verwendet werden.

11. Stabilisierter Polyethylengrieß, erhältlich nach einem der Verfahren gemäß den Ansprüchen 1 bis 10.

## Claims

1. A process for stabilizing polyethylene grit, in which a sterically hindered phenol and an ester of phosphorous acid or of hypophosphorous acid are added to the grit, wherein the ester of phosphorous or of hypophosphorous acid is made available to the polyethylene grit within a ground polyolefin matrix in which the ester is incorporated, the polyolefin matrix being compatible with the polyethylene grit, and the sterically hindered phenol is mixed directly with the polyethylene grit.

2. A process as claimed in claim 1, wherein polyethylene is used as ground polyolefin matrix.

3. A process as claimed in claim 1 or 2, wherein the sterically hindered phenol is used in amounts of from 0.01 to 1% by weight, based on the polyethylene grit.

4. A process as claimed in any of claims 1 to 3, wherein the ground polyolefin matrix is used in amounts of from 0.1 to 10% by weight, based on the polyethylene grit.

5. A process as claimed in any of claims 1 to 4, wherein the sterically hindered phenol and the ground polyolefin matrix containing an ester of phosphorous acid or of hypophosphorous acid are added to the polyethylene grit in at least two separate stages.

6. A process as claimed in claim 5, wherein first of all a sterically hindered phenol is added to the polyethylene grit in a first stage and the ground polyolefin matrix containing an ester of phosphorous acid or of hypophosphorous acid is then added in a second stage.

7. A process as claimed in any of claims 1 to 4, wherein the sterically hindered phenol and the ground polyolefin matrix containing an ester of phosphorous acid or of hypophosphorous acid are added in one process stage to the polyethylene grit.

8. A process as claimed in any of claims 1 to 7, wherein the reaction of the polyethylene grit with the sterically hindered phenol is carried out at temperatures above the melting point of the sterically hindered phenol.

9. A process as claimed in any of claims 1 to 8, wherein esters of β-hydroxyphenylpropionic acid are used as sterically hindered phenols.

10. A process as claimed in any of claims 1 to 9, wherein alkyl-containing aromatic esters of phosphorous acid or of hypophosphorous acid are used in the ground polyolefin matrix.

11. Stabilized polyethylene grit obtainable by a process as claimed in any of claims 1 to 10.

## Revendications

1. Procédé pour stabiliser des granules de polyéthylène, dans lequel on ajoute à ces granules un phénol objet d'un empêchement stérique et un ester de l'acide phosphoreux ou de l'acide hypophosphoreux, caractérisé par le fait que l'on apporte l'ester de l'acide phosphoreux ou hypophosphoreux aux granules de polyéthylène à l'intérieur d'une gangue de polyoléfine broyée dans laquelle l'ester est incorporé, cette gangue de polyoléfine étant compatible avec les granules de polyéthylène, et on mélange directement le phénol, objet d'un empêchement stérique, aux granules de polyéthylène.

2. Procédé selon la revendication 1, caractérisé par le fait que la gangue de polyoléfine broyée consiste en polyéthylène.

3. Procédé selon la revendication 1 ou 2, caractérisé par le fait que l'on utilise le phénol, objet d'un empêchement stérique, en quantité de 0,01 à 1 % du poids des granules de polyéthylène.

4. Procédé selon les revendications 1 à 3, caractérisé par le fait que l'on utilise la gangue de polyoléfine broyée en quantité de 0,1 à 10 % du poids des granules de polyéthylène.

5. Procédé selon les revendications 1 à 4, caractérisé par le fait que l'on ajoute le phénol objet d'un empêchement stérique et la gangue de polyoléfine broyée contenant un ester de l'acide phosphoreux ou hypophosphoreux aux granules de polyéthylène en au moins deux stades opératoires séparés.

6. Procédé selon la revendication 5, caractérisé par le fait que l'on ajoute d'abord aux granules de polyéthylène, dans un premier stade opératoire, un phénol objet d'un empêchement stérique puis, dans un deuxième stade opératoire, la gangue de polyoléfine broyée contenant un ester de l'acide phosphoreux ou hypophosphoreux.

7. Procédé selon les revendications 1 à 4, caractérisé par le fait que l'on ajoute aux granules de polyéthylène le phénol objet d'un empêchement stérique et la gangue de polyoléfine broyée contenant un ester de l'acide phosphoreux ou hypophosphoreux en un seul stade opératoire.

8. Procédé selon les revendications 1 à 7, caractérisé par le fait que la réaction entre les granules de polyéthylène et le phénol objet d'un empêchement stérique est réalisée à des températures supérieures au point de fusion du phénol objet d'un empêchement stérique.

9. Procédé selon les revendications 1 à 8, caractérisé par le fait que l'on utilise, en tant que phénol objet d'un empêchement stérique, un ester de l'acide bêta-hydroxyphénylpropionique.

10. Procédé selon les revendications 1 à 9, caractérisé par le fait que l'on utilise dans la gangue de polyoléfine broyée des esters aromatiques, contenant des groupes alkyle, de l'acide phosphoreux ou hypophosphoreux.

11. Granules de polyéthylène stabilisés obtenus par un procédé selon les revendications 1 à 10.
